# EUROPEAN PATENT APPLICATION

(11) **EP 2 977 361 A1**
(43) Date of publication of application: **27.01.2016**
(21) Application number: 14177812.6
(22) Date of filing: 21.07.2014
(51) Int. Cl.: C03C 17/00, B41M 5/26, B41M 5/28, C09D 5/26

(54) **Marking of substrates**

(71) Applicant: DPX Holdings B.V., 1014 BA Amsterdam (NL)
(72) Inventor: Van Benthem, Rudolfus Antonius Theodorus Maria, 6100 AA ECHT (NL); Wolffs, Martin, 6100 AA Echt (NL); Wyman, Paul, 6100 AA ECHT (NL); Habets, Roberto Arnoldus Dominicus Maria, 6100 AA ECHT (NL); Arfsten, Nanning Joerg, 6100 AA ECHT (NL)
(74) Representative: Bootsma, Jan P.C.

(57) **Abstract**

A method of marking substrates and marked containers are disclosed. A method comprises the steps of applying and curing a coating composition comprising (a) a matrix forming material comprising an inorganic oxide or inorganic oxide precursor, and (b) an organic pore forming agent. The marking is provided by removing at least a portion of the organic pore forming agent in a selected location of the coating layer. The marking may be provided on a container with a product or heat-sensitive product inside. Additional embodiments relate to multi-layer coatings and methods for forming multi-layer coatings.

## Description

### Field

The invention relates to the marking of substrates, such as glass.

### Background

Substrates may be marked for many reasons. For example, a surface may be marked with a product name, a serial number, a barcode, or some other identifying characteristic. The marking may be also used as an anti-counterfeiting measure. Glass is a particularly desirable substrate to mark because glass is a natural barrier to most liquids and gasses, and vials, bottles, and other containers are typically made from glass.

There are several known methods to mark substrates. One method is to mark a material before it is formed into the desired shape of the substrate, such as stamping or molding glass when it is still in the molten state. A second such method is to remove certain portions of the material to form the desired mark, such as by machining, etching, or engraving.

The above methods present undesirable process and material handling implications. Moreover, such methods are generally most useful in volume production processes wherein it is desired that each substrate be identically marked. In other marking applications, such as when marking by serial number or date, or providing an anti-counterfeiting mark, the mark may vary from one substrate to the next in the same production line.

Direct laser marking is one method used to mark substrates when the mark must vary from one substrate to the next. Direct laser marking can be used to mark either a surface of the substrate or an internal location of a substrate. In either case, the marking is formed by focusing the laser at the desired position of the substrate and moving either the laser beam or the substrate to create the desired mark. Direct laser marking of the internal location of a substrate requires that the substrate be at least partially transparent.

Direct laser marking, particularly direct laser marking of glass, is not without drawbacks. If a relatively low cost long-wavelength, long-pulse laser is used, microcracks are created on the surface of or within the glass. These microcracks cause a weakening of the glass. Weakening of the glass is unacceptable in certain industries, such as the pharmaceutical industry. Other types of lasers may mark glass without inducing microcracks, but these short-wavelength, short-pulse lasers come at a much higher cost. Furthermore, the time required to direct laser mark glass may cause a bottleneck in a high-speed production line. Laser marking of plastics generally requires some level of degradation of the plastic substrate or a plastic that contains additives to enhance its markability.

Other methods of marking of transparent substrates include the marking of coatings formed on a substrate. Such processes are disclosed in, for example, US6133342 and US6261348. Such coatings are usually organic. Marking is carried out by applying heat, such as in the form of an appropriate laser beam. Advantageously, no cracking or deformation of the substrate itself is required to mark the substrate. Disadvantageously, such organic coatings are often soft relative to the underlying substrate and mechanically vulnerable. The coatings may be subject to dulling, marring, scratching or delamination. Furthermore, the coatings may rely on opacity modification. As such, the unmarked location(s) of the coating may not be highly transparent in the unmarked state and the contrasting effect on colored, transparent substrates will be limited.

### Summary

The methods of marking substrates of the prior art are not simultaneously highly durable, highly transparent, and capable of being marked at high speed without modifying the substrate itself. Microcracking or other deformation of the substrate is an unacceptable side effect of marking in certain application, such as pharmaceutical applications. Furthermore, many methods of marking substrates in the prior art rely on opacity modification to produce the marked effect. Consequently, the prior art may not allow for a marking that is fully transparent in both the marked and unmarked sections.

The inventors discovered that selectively removing at least a portion of an organic pore forming agent from an inorganic matrix may induce a refractive index difference between a location where at least a portion of the organic pore forming agent is removed and a location where at least a portion of the organic pore forming agent is either not removed or less of the organic pore forming agent is removed. The difference in refractive index may create the appearance of reflective and anti-reflective locations through an interference effect, thereby creating a visual contrast as a marking effect, and enabling readability. In addition to the visible contrast between reflecting and anti-reflecting locations, differences in wave length dependency between different locations of the reflected light may add to visible differences, i.e. the perception of color. Thus a substrate may be marked while retaining a high level of transparency, if desired, even in the a marked location. Preferably, the organic pore forming agent is removed by degrading it thermally, such as by application of heat with a laser beam.

An organic pore forming agent interspersed within an inorganic matrix may be present in the form of a coating layer. A coating comprises one or more coating layers. In embodiments of the invention, the matrix comprises inorganic oxide particles. In such embodiments, the inorganic oxide particles have a core comprising the organic pore forming agent. In further embodiments, the matrix is formed in situ from an inorganic oxide precursor.

In a first embodiment, a method of marking a container is provided. The first step of the method is applying a coating composition on the external surface of a container. The coating composition comprises (a) a matrix forming material comprising an inorganic oxide or inorganic oxide precursor, and (b) an organic pore forming agent. The next step is curing the coating composition, thereby forming a coating layer comprising a matrix, the matrix comprising an inorganic oxide and the organic pore forming agent. The next step is removing at least a portion of the organic pore forming agent in a selected location of the coating layer.

In an embodiment, a product or heat-sensitive product is introduced into the container prior to removing at least a portion of the organic pore forming agent in a selected location of the coating layer. The coating composition may be cured to form a coating layer before or after the step of introducing a product or heat-sensitive product into the container. As used throughout this application, a heat sensitive product is any product that rapidly degrades after exposure for an appreciable length of time to a temperature from just above its recommended storage temperature to 200 °C, such as at 40 or 50 °C. For example, certain vaccines with recommended storage temperatures that require refrigeration conditions are heat sensitive products because they may degrade over the course of a few days if stored at ambient conditions. The speed of degradation of a heat-sensitive product is usually accelerated with increasing temperatures. In an embodiment, the product may be a biocompatible product, which may also be heat-sensitive. A biocompatible product is any product useful in or on a human or animal body. For example, a perfume, a pharmaceutical, a vaccine, nutrients, cosmetics, or an implant are biocompatible products.

In a second embodiment, a marked container is disclosed. The marked container comprises a container and a marking on the container. Optionally, a product is inside the container. The product may be a heat-sensitive and/or biocompatible product. The marking comprises a coating layer. The coating layer comprises a matrix. The matrix comprises an inorganic oxide and pores. There is a first amount of organic pore forming agent in a first location of pores and a second amount of organic pore forming agent in a second location of pores. The second amount of organic pore forming agent is less than the first amount of organic pore forming agent.

In a third embodiment, a container comprising a transparent substrate and a multi-layer coating is disclosed. The multi-layer coating comprises a first selectively marked coating layer and a contrast layer. The first selectively marked coating layer is in contact with the contrast layer. The first selectively marked coating layer or the contrast layer may be in contact with the transparent substrate. The contrast layer has an average refractive index that is different from the average refractive index of the first selectively marked coating layer by at least 0.1. The first selectively marked coating layer comprises (a) a first location of pores, wherein the first location of pores comprises a first amount of an organic pore forming agent, and (b) a second location of pores, wherein the second location of pores comprises a second amount of an organic pore forming agent that is less than the first amount of organic pore forming agent.

The markings, methods, and articles, disclosed herein may have utility as an anti-counterfeiting mechanism, serialization mechanism, time-stamping mechanism, or date-stamping mechanism. A chemical signature or coloring is provided by the marking in particular embodiments.

### Brief Description of the Drawings

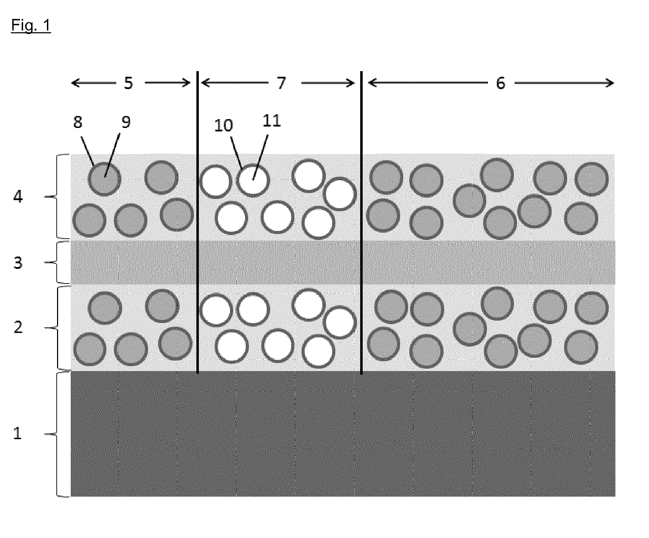

Fig. 1 is a schematic view of a section of an embodiment of a container comprising a multilayer coating.

### Detailed Description

The visual effect provided in accordance with the invention may be provided by a difference in refractive index between the marked location(s) and unmarked location(s) of the marking. Such a method of marking may allow for markings that retain a high level of transparency in the marked state. The high level of sensitivity for refractive index changes in both the human eye and industrial machinery allows for a visible marking with a thin coating. Moreover, cracking or other undesirable modification of the underlying substrate is not necessary.

The coating composition comprises (a) a matrix forming material comprising an inorganic oxide or inorganic oxide precursor, and (b) an organic pore forming agent. Once applied and cured, the coating composition forms a coating layer. The coating layer formed from such a coating composition comprises a matrix. The matrix comprises an inorganic oxide and the organic pore forming agent.

The matrix comprises an inorganic oxide. The inorganic oxide may be present in the coating composition as such (i.e. the coating composition comprises an inorganic oxide) and/or formed prior to or during the step of curing the coating composition from an inorganic oxide precursor.

Preferably, the inorganic oxide is a metal oxide. Suitable metal oxides may be oxides of Si, Al, Bi, B, In, Ge, Hf, La and lanthanoids, Sb, Sn, Ti, Ta, Nb, Y, Zn and Zr, and mixtures thereof. Particularly preferred are metal oxides comprising one or more of Si, Al, Ti, and Zr.

Suitable inorganic oxide precursors include metal salts, metal chelates and organo-metallic compounds, preferably metal alkoxides, and combinations thereof. Such compounds can undergo various hydrolysis and/or condensation reactions to form corresponding oxides. Preferred inorganic oxide precursors include alkoxy silanes, like tetramethoxy silane (TMOS), tetraethoxy silane (TEOS), methyltrimethoxy silane, methyltriethoxy silane, titanium tetraisopropoxide, aluminum nitrate, aluminum butoxide, yttrium nitrate and zirconium butoxide. Such precursor compounds can have been partially pre-reacted or pre-hydrolyzed to form oligomeric species, typically in the form of nano-sized particles of about 1-20 nm; also called sol particles. In an embodiment, the matrix forming material comprises a mixture of a silica precursor and a precursor for Al-oxide or Y-oxide.

The matrix forming material can comprise a mixture of inorganic oxide precursor and corresponding inorganic oxide. Such mixture may for example result in case an inorganic oxide precursor has been partially pre-reacted or pre-hydrolyzed to form oligomeric species, typically in the form of nano-sized particles; which is a well-known procedure in sol-gel technology.

The organic pore forming agent is selected from materials that are at least partially removable from the matrix. In a preferred embodiment the organic pore forming agent comprises a thermo-degradable or thermo-labile polymer. Preferred organic pore forming agents become labile at 600 °C or less, more preferably 450 °C or less, even more preferably 350 °C or less. Preferably the organic pore forming agent becomes labile at higher than room temperature, such as 150 °C or higher.

Preferably, the organic pore forming agent is a polymer. Within the context of this application, the term polymer is used for a molecule comprising two or more repeating units. Examples of suitable organic pore forming agents include homopolymers, random co-polymers, block-copolymers, diblock- copolymers, triblock-copolymers, alternating copolymers, branched copolymers, gradient copolymers, and combinations thereof. Preferably the organic pore forming agent comprises a polymer selected from polyesters, polyamides, polycarbonates, polyurethanes, polystyrenes, polyacrylates, polymethacrylates, polyvinylic, polyolefinic, cellulosics, glucosaminoglycans, and combinations thereof.

The organic pore forming agent may be selected for compatibility with the matrix forming material. More specifically, the organic pore forming agent is selected such that it can serve as a template for the matrix forming material. For example, the organic pore forming agent may comprise an organic polymer that may be present as colloidal particles or aggregates in the coating composition such that an inorganic oxide precursor is able to complex with or deposit itself on the organic pore forming agent. In a further such example, the organic pore forming agent is selected such that it can form a suitable core on which to form an inorganic oxide shell, thereby forming a so-called core-shell particle.

In an embodiment, the organic pore forming agent is a latex, more preferably an ionically or sterically stabilized polymer latex. In an embodiment, the organic pore forming agent is a cationic or anionic latex. As used herein, the term 'latex' refers to stabilized suspension of polymeric particles. Preferably the suspension is an ionically and/or sterically stabilized suspension. In an embodiment, the latex comprises polymer and cationic surfactant. Any suitable polymer may be used such as, for example, homopolymers, random copolymers, block-copolymers, diblock-copolymers, triblock-copolymers, and combinations thereof. In an embodiment, the organic pore forming agent is a synthetic ionic copolymer.

The organic pore forming agent comprises a polymer. The polymer may be cationic, anionic, or neutral. In an embodiment, the organic pore forming agent comprises a cationic polymer. The cationic group may be incorporated into the polymer or may be added in any other form such as, for example, by the addition of a cationic surfactant. Preferably the cationic groups are at least partially bound to the polymer. Preferably the cationic groups are incorporated into the polymer during polymerization.

In an embodiment, the organic pore forming agent comprises a cationic block copolymer. Preferably, said copolymer comprises a first polymer and a second polymer which both comprise amino-based (alk)acrylate monomer units, more preferably tertiary amino-based (alk)acrylate units, most preferably tertiary aminoalkyl (alk)acrylate units. Preferably, said (alk)acrylate units comprise acrylate or, more particularly, methacrylate units. In preferred embodiments, said tertiary aminoalkyl methacrylate units comprise dialkylaminoalkyl methacrylate units, especially dialkylaminoethyl methacrylate units.

In an embodiment, the organic pore forming agent comprises a polyampholyte. A polyampholyte is an ampholytic or amphoteric copolymer, i.e. a copolymer or polyelectrolyte formed from at least one comonomer having a positively charged group and at least one comonomer having a negatively charged group. At least one neutral or non-ionic comonomer may additionally be used to form the polyampholyte. The polyampholyte thus comprises a pendant group with a positive charge and a pendant group with a negative charge. The polyampholyte may be a random copolymer or a block copolymer. The polyampholyte can be a condensation polymer, like a polyester, polyamide, polyurethane and the like; or an addition polymer, comprising styrenic, acrylic, methacrylic, olefinic, and/or vinylic comonomers.

In an embodiment, the polyampholyte comprises zwitterionic pendant groups.

Synthesis of polyampholytes from various ethylenically unsaturated monomers is described in US6361768, which is hereby incorporate by reference in its entirety. Typically a radical polymerization is performed in an organic solvent, and optionally surfactants are present to prevent agglomeration of copolymer formed.

In an embodiment, the organic pore forming agent comprises a polyampholyte obtained from
- at least one cationic or basic monomer (M1 ), including compounds with a pendant group that can combine with a proton; like monomers with a tertiary amine group;
- at least one anionic or acidic monomer (M2), including compounds with a pendant group that can yield a proton; like monomers containing carboxylic acid groups;
- at least one neutral or non-ionic monomer (M3); preferably a non-water soluble or hydrophobic comonomer; and
- optionally at least one cross-linking monomer (M4).

If the neutral or non-ionic monomer (M3) is a non-water soluble or hydrophobic comonomer, the ionic comonomers M1 and M2 will increase solubility and dispersability of the polyampholyte in an aqueous system; whereas presence of non-ionic monomer units M3 will reduce solubility. Too high an amount of M3 may result in insolubility and/or precipitation of the polyampholyte. The type and amount of M3 is thus preferably chosen such that the polyampholyte can still be dispersed in an aqueous medium into colloidal particles, with M3 units promoting self-association by non-polar or hydrophobic interaction. Optionally, the polyampholyte may comprise a small amount of di- or polyfunctional monomer M4, which will induce a level of cross-linking that may further stabilize the colloidal particles formed.

In an embodiment, the the organic pore forming agent comprises a polyampholyte that is a copolymer obtained from
- 0.1 -40 mole% of at least one monomer M1 ;
- 0.1 -40 mole% of at least one monomer M2;
- 18-98.8 mole% of at least one monomer M3; and
- 0-2 mole% of at least one monomer M4 (with the sum of M1 , M2, M3 and M4 adding up to 100%).

A molar excess of M1 over M2 results in a cationic polyampholyte, an excess of M2 over M1 in an anionic polyampholyte, also depending on conditions like pH.

In an embodiment, the polyampholyte is a cationic polyampholyte, more specifically such a cationic copolymer obtained from
- 5-40 mole% of at least one monomer M1;
- 0.5-20 mole% of at least one monomer M2;
- 38-94.5 mole% of at least one monomer M3; and
- 0-2 mole% of at least one monomer M4;
wherein the polyampholyte comprises more M1 than M2 monomer units and the polyampholyte has a net positive charge.

In further embodiments, the polyampholyte in the coating composition is such a cationic copolymer obtained from at least 6, 7, 8, 9 or 10 mole%, and at most 35, 30, 25, 20 or 16 mole% of at least one monomer M1; from at least 0.6, 0.7, 0.8, 0.9 or 1 mole%, and at most 15, 10, 8, 6, 5 or 4 mole% of at least one monomer M2; and at least one monomer M3 in such amount that the sum of M1 , M2, and M3 is 100 mole%.

In embodiments of the invention wherein an anionic polyampholyte is used, ranges for M1 and M2 are similar to the ranges for M2 and M1, respectively, as mentioned for a cationic polyampholyte.

Cationic monomers M1 that can be suitably used in forming the polyampholyte in the composition according to the invention via addition polymerization include vinyl monomers with an amino functional group; which can be non-ionic monomers that are neutralized to become cationic during or after forming the copolymer, monomers with an already neutralized amino functional group, or vinyl monomers with a permanent quaternary ammonium group.

Examples of vinyl monomers with a non-ionic amino functional group include N,N-dimethylaminoethyl (meth)acrylate, N,N-dimethylaminohexyl (meth)acrylate, N,N-diethylaminoethyl (meth)acrylate, N-methyl-N-butyl-aminoethyl (meth)acrylate, tert-butylaminoethyl (meth)acrylate, N,N-dimethylaminopropyl (meth)acrylate, 2-(1 ,1 ,3,3,-tetramethylbutylamino)ethyl (meth)acrylate, beta-morpholinoethyl (meth)acrylate, 4-(beta-acryloxyethyl) pyridine, vinylbenzylamines, vinylphenylamines, 2-vinylpyridines or 4-vinylpyridines, p-aminostyrenes, dialkyaminostyrenes such as N,N,-diaminomethylstyrene, substituted diallylamines, N-vinylpiperidines, N-vinylimidazole, N-vinylimidazoline, N-vinylpyrazole, N-vinylindole, N-substituted (meth)acryl amides like 2-(dimethylamino)ethyl (meth)acrylamide, 2-(t-butylamino)ethyl (meth)acrylamide, 3-(dimethylamino)propyl (meth)acrylamide, (meth)acryl amide, N-aminoalkyl (meth)acrylamides, vinyl ethers like 10-aminodecyl vinyl ether, 9-aminooctyl vinyl ether, 6-(diethylamino)hexyl vinyl ether, 5-aminopentyl vinyl ether, 3-aminopropyl vinyl ether, 2-aminoethyl vinyl ether, 2-aminobutyl vinyl ether, 4-aminobutyl vinyl ether, 2-dimethylaminoethyl vinyl ether, N-(3,5,5,-triethylhexyl)aminoethyl vinyl ether, N-cyclohexylaminoethyl vinyl ether, N-tert-butylaminoethyl vinyl ether, N-methylaminoethyl vinyl ether, N-2-ethylhexylaminoethyl vinyl ether, N-t-octylaminoethyl vinyl ether, beta-pyrrolidinoethyl vinyl ether, or (N-beta-hydroxyethyl-N-methyl) aminoethyl vinyl ether. Cyclic ureido or thiourea containing ethylenically unsaturated monomers like (meth)acryloxyethyl ethyleneurea, (meth)acryloxyethyl ethylenethiourea (meth)acrylamide ethyleneurea, (meth)acrylamide ethylenethiourea and alike can also be used. Preferred monomers are amino-functional (meth)acrylates and (meth)acrylamides; especially N,N,-dialkylaminoalkyl (meth)acrylates, more specifically t-butylaminoethyl methacrylate, dimethylaminopropyl methacrylate, dimethylaminoethyl methacrylate (DMAEMA) or diethylaminoethyl methacrylate (DEAEMA), more preferably DMAEMA and DEAEMA. The above given examples of suitable non-ionic M1 monomers can also be used in their ionized form, by treating with for example an acid, such as an organic acid like a carboxylic acid, prior to polymerization. In an embodiment, the cationic monomer M1 is a vinyl monomer with a non-ionic pendant amino functional group.

Suitable examples of M1 monomers with a permanent quaternary ammonium group include methacrylamidopropyl trimethylammonium chloride (MAPTAC), diallyl dimethyl ammonium chloride (DADMAC), 2-trimethyl ammonium ethyl methacrylic chloride (TMAEMC) and quaternary ammonium salts of substituted (meth)acrylic and (meth)acrylamido monomers.

Anionic or acidic monomers M2 that can be suitably used in forming the polyampholyte via addition polymerization include vinyl monomers with a pending phosphoric, sulfonic, or carboxylic acid group. In an embodiment, vinyl monomers with a carboxylic acid group are used, examples including ethylenically unsaturated monocarboxylic and/or dicarboxylic acids, like fumaric acid, itaconic acid, maleic acid, and especially (meth)acrylic monomers with a carboxylic acid group, such as acrylic acid (AA), methacrylic acid (MAA) and β-carboxy ethylacrylate. In an embodiment, the M2 monomers are acrylic acid and/or methacrylic acid.

Neutral or non-ionic monomers M3 that can be suitably used in forming the polyampholyte via addition polymerization include a wide range of ethylenically unsaturated monomers or vinyl monomers, including various styrenic, (meth)acrylic, olefinic, and/or vinylic comonomers. The at least one monomer M3 may be hydrophilic or hydrophobic, or a mixture of both. In an embodiment, the polyampholyte comprises a certain amount of non-water soluble or hydrophobic comonomers, which will promote the copolymer, not being fully water soluble, in order to self- assemble into colloidal particles or aggregates in an aqueous medium. The skilled person will be able to select suitable combinations of monomers and their contents based on the information disclosed in this description and depending on copolymer composition (like M1 and M2 types and amounts) and conditions (like solvent composition, temperature, pH).

Suitable styrene monomers M3 include styrene, alpha-methyl styrene and other substituted styrenes. Suitable (meth)acrylic monomers M3 include alkyl or cycloalkyl (meth)acrylates, preferably Ci - Ci₈ alkyl (meth)acrylates or Ci - C₈ alkyl (meth)acrylates, like methyl (meth)acrylate, ethyl (meth)acrylate, butyl (meth)acrylate (all isomers), isobutyl (meth)acrylate, 2-ethylhexyl (meth)acrylate, isopropyl (meth)acrylate, propyl (meth)acrylate (all isomers). In embodiments, the (meth)acrylic monomers include methyl methacrylate (MMA), ethyl methacrylate (EMA), and/or n-butyl methacrylate (BMA). Similarly, N-alkyl (meth)acrylamides can be used as monomer M3. Also other monomers that can be copolymerized with M1 and M2 can be used as monomer M3, including acrylonitrile, methacrylonitrile, butadiene, dimethylbutadiene; vinyl monomers like vinyl chloride, vinyl pyrrolidone, vinyl esters such as vinyl acetate, vinyl propionate, vinyl laurate, vinyl alkyl ethers, and the like.

Suitable examples of di- or polyfunctional monomer M4 include allyl methacrylate, divinyl benzene, ethyleneglycol di(meth)acrylate, butanediol di(meth)acrylate, trimethylolethane tri(meth)acrylate, hexanediol di(meth)acrylate, and trimethylolpropane tri(meth)acrylate. In an embodiment, a difunctional monomer is used, preferably in amount of 0- 1 mole% based on the polyampholyte.

In an embodiment the polyampholyte is a cationic copolymer obtained from
- 8-20 mole% of at least one monomer M1 selected from the group consisting of amino-functional (meth)acrylates and (meth)acrylamides;
- 1 -4 mole% of at least one monomer M2 selected from the group of (meth)acrylic monomers with a carboxylic acid group; and
- 76-91 mole% of at least one monomer M3 selected from the group of C1 - C18 alkyl (meth)acrylates.
The molar mass of the polyampholyte can vary widely. Typically, the polyampholyte is a copolymer having a weight averaged molar mass (Mw) in the range 1 -500 kDa (kg/mol). In embodiments, the Mw is at least 2, 5, 10,15 or 20 kDa, but at most about 250, 200, 150, 100, 50 or 35 kDa, for optimum formation of colloidal aggregates. The molar mass of the copolymer can be determined by gel permeation chromatography (GPC) using polymethylmethacrylates of known molar masses as a standard and hexafluoro iso-propanol as a solvent.

If present, a polyampholyte is typically present in the coating composition in the form of dispersed colloidal particles or aggregates. In embodiments, the average particle size of the colloidal particles, as measured with Dynamic Light Scattering (DLS) as the z-average on an aqueous dispersion at the desired pH and ionic concentration, is preferably is in the range of 10-300 nm, more preferably the average size of the colloidal particles is at least about 15, 20, 25 or 30 nm, and at most about 250, 200, 150, 100 or 75 nm. Particle size of dispersed colloidal polyampholyte particles is found to be not only dependent on molecular composition of the polyampholyte, but may also be controlled by the dispersion conditions, like solvent composition, pH, temperature, salt concentration, etc.

In embodiments, the organic pore forming agent may be coated with inorganic oxide by, for example, treatment with a suitable inorganic oxide precursor.

In embodiments of the invention, the coating composition comprises core-shell particles. The core-shell particles comprise an inorganic oxide shell and a core comprising the organic pore forming material. In such embodiments, the matrix forming material comprises the shell of the core-shell particle.

Typically, such core-shell particles are formed by the steps of a) providing colloidal organic particles comprising an organic pore forming agent as a template; b) adding at least one inorganic oxide precursor; and c) forming a shell layer from the precursor on the template to result in core-shell particles. Such formation of an inorganic shell layer is typically performed in a sol-gel process.

The step of forming a shell layer from the precursor on the template to result in core-shell particles is typically performed under mild conditions and in aqueous medium. The aqueous medium may comprise an organic solvent that is miscible with water, like alcohols, ketones, esters, or ethers; preferably an alcohol like methanol, ethanol or iso-propanol. Water serves as solvent or diluent for the composition, but may also react with the inorganic oxide precursor; for example with an alkoxy silane. The amount of water present in the composition is therefore preferably at least the amount needed for such desired reaction(s), like (partial) hydrolysis of the inorganic oxide precursor.

The temperature is not very critical in the process and can be varied widely as long as the dispersion of colloidal organic particles is not disrupted. Temperature can be up to 100 °C, but is typically ambient, i.e. from about 15 to 40 °C. As said hydrolysis reaction is exothermic, cooling may be used to control temperature in this step. The pH is chosen in acidic or basic range, dependent on the type of core: in case of a cationic core the pH is in the range 2-6, preferably 3-5 or 3-4.5, if an anionic core is used pH is about 8-12, preferably 9-11 or 9-10. An advantage of applying such conditions is that particles formed from the precursor and typically having a charge, will at least partly deposit on the colloidal organic particles of opposite charge.

These above described steps of the process are typically performed at ambient pressure, but increased (or reduced) pressure may also be applied.

The method of forming a shell layer on the template from an inorganic oxide precursor is typically performed at a mass ratio of inorganic oxide precursor to organic template of about 0.25 to 5, preferably 0.5 - 2, more preferably 1 - 1.8.

The forming of a shell layer from the precursor on the template may be monitored by measuring change in dimensions of the colloidal particles, by Dynamic Light Scattering (DLS). Although the DLS technique has its draw-backs, for example mainly detecting the larger particles, and particle size may also change as result of compounds liberated from the inorganic oxide precursor, like an alcohol, being absorbed in the core, it is a simple and convenient method to observe shell formation. Shell formation may slow down or stop when the net charge of the colloidal organic particle has decreased by the inorganic oxide (precursor) having charge opposite to that of the core.

In an embodiment, the shell comprises silica, and if so, preferably the shell comprises at least 90%, by weight, of silica. The shell may be continuous and porous, continuous and closed, discontinuous and porous, or discontinuous and closed.

Preferably the shell is at least 1 nm thick, more preferably at least 5 nm, even more preferably at least 10 nm. Preferably the shell is 75 nm thick or less, more preferably 50 nm or less, even more preferably 25 nm or less. In the case of a discontinuous shell, the shell thickness is measured only in the locations where there is coverage. Shell thickness of core-shell particles, and their morphology can be assessed on particles with techniques like TEM, especially cryo- TEM, SAXS, SANS, or AFM. In embodiments, the structure of the shell formed, like its density or surface properties, may be affected by extending reaction time, reacting with a coupling agent or other treatment as known from the art.

The core-shell particles may be of any suitable size, but preferably have an average particle size of at most 500 nm, more preferably at most 400, 300, 200, 150, 100, or even 75 nm. Particle size is defined as 0.5 x (length + width) for non-spherical particles and as the diameter for spherical particles. Preferably, the average particle size is 1 nm, 5 nm, 10 nm or more, more preferably at least 15, 20, 25 or 30 nm. The average size of the particles is determined by Dynamic Light Scattering (DLS) as described previously.

In an embodiment, the method of forming the core-shell particles further comprises the step of stabilizing the dispersion obtained by diluting the dispersion to below e.g. 5 or 3 mass%, preferably with solvents as mentioned above, and/or by changing pH. Storing at low temperatures, preferably below room temperature, more preferably below 15 or 10 °C but above freezing temperature, will also increase shelf- life of the composition.

In a further embodiment, the method of forming the core-shell particles further comprises the step of stabilizing the dispersion obtained by changing the pH to a level at which the inorganic oxide and/or its precursors will not react, including reacting at least only very slowly, to prevent agglomeration of core-shell particles; in case of silica precursors preferably to a pH of about 2-3 (as measured with a standard pH electrode on aqueous or alcoholic dispersion).

Preferably the core comprises about 30% or more, more preferably about 50% or more, even more preferably about 70% or more, even more preferably still about 90% or more, by weight, of organic pore forming agent.

In an embodiment, the amount of particles in the coating composition is more than 50 mass% based on the total solids content of the coating composition, preferably more than 60 or 70 mass%. The total solids content of the coating composition is the content of all components that do not evaporate after the coating composition has been applied to a substrate and subsequently dried and, if required, cured.

The coating composition may further comprise a solvent. Depending on the nature of the coating composition and other components that can be optionally present, such as a binder, various solvents can be used in the coating composition. Such solvents include non-protic and protic organic solvents, like ketones, esters, ethers, alcohols, glycols, and mixtures thereof. Suitable other solvents are water or are miscible with water or can at least dissolve a certain amount of water. Examples include 1 ,4-dioxane, acetone, diethylacetate, propanol, ethanol, methanol, butanol, methyl ethyl ketone, methyl propyl ketone, and tetrahydrofuran. Preferably, the solvent comprises a lower (C1-C8) aliphatic alcohol, like methanol, ethanol, iso-propanol or 1-methoxypropan-2- ol; more preferably the solvent comprises ethanol or iso-propanol; and a certain amount of water.

The amount of solvent can be varied to obtain a desired viscosity of the coating composition, which viscosity may be relatively low to allow easy application to a substrate in thin films. Typically the viscosity of the coating composition at 25 °C is at least about 0.6 mPa·s, preferably at least 1 .0 or 2.0 mPa·s. The viscosity at 25 °C may be as high as 1000 mPa·s for certain applications depending on the application or deposition method. Preferably viscosity at 25 °C is at most 500, 300 or 200 mPa·s. for making thin layers of homogeneous thickness. The viscosity can be measured with known methods, for example with an Ubbelohde PSL ASTM IP no 1 (type 27042) especially for low viscosity ranges, or with a Brookfield viscometer.

In embodiments, the coating composition comprises a binder, which can be at least one inorganic or organic polymeric or polymerizable compound. The binder may also act as part of the matrix forming material. The binder may act as film former, potentially resulting in improved mechanical properties of the coating layer formed or better adhesion to a substrate upon drying and/or curing. Suitable organic binders include a range of different polymers and thermal or radiation curable monomers, as known to the skilled person.

In an embodiment, the binder comprises organic compounds. In an embodiment, the binder comprises inorganic compounds. In an embodiment, the binder comprises a combination of inorganic and organic binders. These binders may form polymers or networks on their own, but can also co-react with one another.

In an embodiment, the binder consists essentially of one or more inorganic compounds. In such an embodiment, the binder is substantially devoid of organic compounds. In an embodiment, the binder consists essentially of one or more organic compounds. In such an embodiment, the binder is substantially devoid of inorganic compounds.

The coating composition according to the invention may, in addition to the matrix forming material, the organic pore forming agent, and optionally the solvent and the binder, optionally further comprise other non-volatile or solid components. Such components, if present, are preferably present at no more than 20 or 10 mass%, more preferably no more than 5 mass% based on total solids content of the coating composition. These components may be added to affect other functionalities of the coating layer or assist in the processing of the coating composition. Examples of other components include, buffer agents, catalysts, coupling agents, surfactants, antifoaming agents, chelating agents, slip agents and leveling agents.

Optionally, a surfactant may be present to further stabilize the coating composition. The surfactant used may be non-ionic, cationic or anionic, or a combination thereof depending coating composition.

Optionally, a catalyst may be present in the coating composition. If a catalyst is used it is preferably an acid catalyst. Suitable catalysts include, but are not limited to, organic acids like acetic acid, formic acid, nitric acid, citric acid, tartaric acid, inorganic acids like phosphoric acid, hydrochloric acid, sulphuric acid, and mixtures thereof, although acid with buffer capacity are preferred.

Optionally, one more coating layers can provide a coloration effect. This may be accomplished by visual interference or a coloring agent.

In the case of a coloration effect provided by visual interference, one or more coating layers or contrast layers can be varied in thickness and refractive index to induce the desired coloration effect. The refractive index of the coating layers may be varied by removing more or less of the organic pore forming agent in certain locations. The refractive index of the contrast layers may be varied by changing the contrast material.

In the case of a coloration effect provided by a coloring agent, a coloring agent may be added to a coating layer or coating composition. Examples of coloring agents are pigments, dyes, and dopants. The coloring agent should be selected so that it is not degraded when curing the coating composition. Depending on the coating layer thickness, the coloring agent may be added to the organic pore forming agent and then be removed along with the organic pore forming agent. In such a case, the coloring agent is typically an organic dye or organic pigment.

In embodiments, the coating composition may comprise a chemical tracer. A chemical tracer is useful in the case of an anti-counterfeiting application. A chemical tracer may be used to verify the authenticity of an item by chemically analyzing the coating. The chemical tracer is a compound that is detectable by various means, such as ICP-AES (inductively coupled plasma atomic emission spectroscopy), AAS (atomic absorption spectroscopy), XRF (x-ray fluorescence), SIMS (secondary ion mass spectrometry), or similar techniques. In certain techniques, some of the sample may be destroyed in the process of analyzing for the presence of the chemical tracer.

The amount and form of the chemical tracer is selected so that the chemical tracer can be identified by the appropriate identifying process or machinery. A chemical tracer may be included on a parts per million or even parts per billion level. An example of a chemical tracer is a specific ratio of compounds in the matrix forming material, such as specific ratios of inorganic oxides or inorganic oxide precursors. Further examples, are specific elements added to the coating composition in small amounts, such as at a parts per million or even parts per billion level.

The coating composition of the invention typically has a total solids content of less than about 20, 15 or 10 mass% of the coating composition. The coating composition typically has a minimum solids content of the coating composition of about 0.1 mass%, at least 0.2, 0.5 or 1.0 mass% of the coating composition.

The coating composition can be applied to a substrate. Any suitable substrate may be used. A preferred substrate is the external surface of a container, such as a glass container. The substrate may have a high transparency. For example, the transparency may be about 80% or higher at 2 mm thickness and at a wavelength between 425 and 675 nm, or about 90% or higher, or even about 95% or higher.

The substrate may be organic or inorganic, or a combination of the two. In the case that the substrate is organic, the substrate may be an organic polymer such as a polyethylene naphthalate (PEN), a polycarbonate, a polymethylmethacrylate (PMMA), a cyclic olefin copolymer (COC), a polyester like polyethylene terephthalate (PET), a polyamide, or a polymeric material with similar properties. In this embodiment, it is preferred to use a coating composition that can be cured at temperatures sufficiently low that the chosen organic substrate material remains substantially in its desired shape and does not suffer substantially due to thermal degradation during the step of curing the coating composition.

In embodiments, the substrate is inorganic. Examples of inorganic substrates include ceramics, cermets, glasses, quartz, or combinations thereof. Most preferred is a glass, such as borosilicate or soda lime glasses.

In an embodiment, the coating composition is applied to the substrate so that the resultant coating layer thickness after curing is about 10 nm or greater, 50 nm or greater, 70nm or greater, or 90 nm or greater. If the marking effect is desired to be in the visual region, the coating layer thickness is typically about 300 nm or less, about 200 nm or less, about 160 nm or less, or about 140 nm or less. If the effect is desired to be in the infrared region, for instance in markings that are only readable by machinery, the coating layer thickness is typically 1000 nm or less, 800 nm or less, or 500 nm or less, and more than 100 nm.

In an embodiment, the marking is in the visible region of the electromagnetic spectrum. In an embodiment, the marking is in the infrared region of the electromagnetic spectrum. In an embodiment, the marking is in both the visible and the infrared region of the electromagnetic spectrum.

There are numerous suitable processes to apply the coating composition to the substrate. Methods include meniscus (kiss) coating, spray coating, roll coating, spin coating, ink jetting, flow coating, and dip coating. Dip coating generally provides a coating on all sides of the substrate that is immersed, and gives a repeatable and constant thickness. In an embodiment, glass containers may be dip coated to provide a coating layer on each container's external surface. Meniscus coating, roll coating, ink jetting and spray coating may be useful for continuous processes.

In an embodiment, a selective coating process is used. By selective coating process it is meant a coating process that leaves the majority of the container uncoated. An example of such a process is dip coating wherein the substrate is only partially submersed or certain locations of the substrate are covered so that the coating composition cannot contact the substrate in the covered locations. Other processes may involve roll or spray coating wherein only a thin strip of coating is applied to a particular location of the substrate.

In an embodiment, multiple different coating compositions are employed, each comprising a different coloring agent. Each coating composition is selectively applied to form a marking comprising different colors.

In an embodiment, a coating composition is selectively applied at different thicknesses in order to induce a desired visual interference effect.

The step of curing the coating composition may be carried out by any suitable method depending on the coating composition and substrate. Examples of curing methods include heating, IR treatment, exposure to UV radiation, catalytic curing, and combinations thereof. Care should be taken to not use a curing mechanism that will substantially remove the organic pore forming agent from the coating layer before the coating layer is selectively marked.

The curing step may be carried out either before or after the optional step of introducing a heat-sensitive product into the container. However, care should be taken to make sure that the curing method will not adversely impact the heat-sensitive product.

In an embodiment, the curing is achieved by heating. Heat curing is generally carried out above 100 °C, such as about 150 °C or more, or about 200 °C or more, and at about 400 °C or less. In an embodiment, curing is carried out at from about 200 °C to about 250 °C.

Once cured, the coating layer comprises a matrix with the organic pore forming agent interspersed within the matrix. The matrix comprises an inorganic oxide. Some residual inorganic oxide precursor from the matrix forming material and/or binder in the coating composition may still be present in the coating layer. In an embodiment, the matrix comprises a mixed inorganic oxide. In an embodiment, the matrix comprises SiO₂.

In embodiments of the invention that comprise the step of introducing a product or heat-sensitive product into the container, the step can be carried out using a wide range of techniques. Exemplary techniques are pouring or dispensing a liquid product or heat-sensitive product, or dispensing a product or heat-sensitive product that is solid.

In an embodiment, the product is a heat-sensitive product. In an embodiment, the product is a biocompatible product. In an embodiment, the product is a heat-sensitive product and a biocompatible product.

Optionally, the product or heat-sensitive product may be sealed in the container. The step of sealing the container may be performed at any time after the step of introducing the product or heat-sensitive product into the container.

The marking effect is at least partially provided by the step of removing at least a portion of the organic pore forming agent in a selected location of the coating layer. The step of removing at least a portion of the organic pore forming agent in a selected location of the coating layer may be achieved in any suitable manner. Preferred methods include thermal degradation and photodegradation of the organic pore forming agent. In an embodiment, the organic pore forming agent is removed by thermal degradation and consequent evaporation. It is also possible that the step of removing at least a portion of the organic pore forming agent in a selected location of the coating layer may be achieved by solvent washing, but the speeds of solvent washing processes may be insufficient in speed and accuracy to be useful in some marking applications.

Accordingly, in an embodiment, the step of removing at least a portion of the organic pore forming agent in a selected location of the coating layer comprises heating the organic pore forming agent to a temperature at which the organic pore forming agent thermally degrades. Preferably the step of removing at least a portion of the organic pore forming agent in a selected location of the coating layer is performed by electron-beam or laser. In an embodiment, a high wavelength (e.g. above 1 micron) laser is used to remove at least a portion of the organic pore forming agent. In an embodiment, thermal degradation of the organic pore forming agent is caused by a laser beam.

By a selected location of the coating layer, it is meant a subset of the overall layer. For example, when the organic pore forming agent has been removed from a coating layer in the shape of a letter of the alphabet, the letter is a selected location. In embodiments, a selected location is in the shape of all or part of a design, a number, a letter, a date stamp, a serial number, a logo, or a bar code. The shape may be provided by, for example, marking the shape directly, for instance marking the shape of a number, or the inverse of that shape, for instance marking the outline of a number.

The porosity of the coating layer after performing the step of removing at least a portion of the organic pore forming agent in a selected location of the coating layer will depend on the relative amount of organic pore forming agent in the initial coating composition, the amount of organic pore forming agent remaining in the coating layer after the step of curing the coating composition, and the amount of organic pore forming agent removed by the step of removing at least a portion of the organic pore forming agent in a selected location of the coating layer.

In an embodiment, the difference in refractive index between a selected location where at least a portion of the organic pore forming agent has been removed and an unselected location is 0.05 or greater. In an embodiment, the difference in refractive index between a selected location where at least a portion of the organic pore forming agent has been removed and an unselected location is 0.1 or greater. In an embodiment, the difference in refractive index between a selected location where at least a portion of the organic pore forming agent has been removed and an unselected location is 0.15 or greater. Any refractive index value or difference in refractive index value mentioned throughout this application is expressed as a refractive index measured at 589.3 nm and 20 °C.

The markings disclosed herein may have utility as an anti-counterfeiting mark, a serialization mark, a date stamp, a barcode, or as a decorative mark.

When the step of removing at least a portion of the organic pore forming agent in a selected location of the coating layer is performed may depend on the type of mark desired. For example, the step of removing at least a portion of the organic pore forming agent in a selected location of the coating layer may be performed after the step of curing the coating composition, and before the optional step of introducing a heat-sensitive product into the container, in the case that the marking will be an anti-counterfeiting mark. However, if the mark is a serialization mark or date mark, the step of removing at least a portion of the organic pore forming agent in a selected location of the coating layer may be performed after or during the optional step of introducing a heat-sensitive product into the container.

Further embodiments of the invention relate to marked containers comprising a marking, the marking comprising a coating layer, the coating layer comprising a matrix, and the matrix comprising (a) an inorganic oxide, (b) a first location of pores, wherein the first location of pores comprises a first amount of organic pore forming agent, and (c) a second location of pores, wherein the second location of pores comprises a second amount of organic pore forming agent that is less than the first amount of organic pore forming agent. The second amount of organic pore forming agent may be no amount of organic pore forming agent, or an amount that indicates that the second location of pores is substantially devoid of organic pore forming agent. The second amount of organic pore forming agent may also be an amount that is sufficiently less than the first amount of organic pore forming agent such that a difference in refractive index from the first location of pores and the second location of pores results, which difference is visible and/or machine detectable.

Examples of containers are bottles, vials, and syringes. There may be any type or amount of product inside the container, or nothing inside the container. In embodiments of the invention, the container has a heat-sensitive product inside. In embodiments, the container comprises a glass. In an embodiment, the container consists of a glass. In an embodiment, the container comprises a transparent substrate on which the marking is provided.

Other embodiments relate to multilayer coatings. Such a multilayer coating comprises at least one, but preferably two coating layers provided from coating compositions as described previously. In an embodiment of a multilayer coating, a contrast layer is in contact with a coating layer. A contrast layer has an average refractive index that is different from the average refractive index of a coating layer that is in contact with the contrast layer by at least 0.1. The coating layer is formed from a coating composition as described previously. The contrast layer is formed from a contrast material. The average refractive index can be measured by measuring the refractive index at five or more randomly selected points of the layer and averaging them. Inclusion of a contrast layer in a multilayer coating may allow for a more pronounced marking effect than in a single layer coating. In an embodiment, the multilayer coating comprises a contrast layer between two coating layers.

Reference is now made to Fig. 1. Fig. 1 is a schematic view of a section of an embodiment of a container comprising a multilayer coating. The container comprises a substrate 1, a first selectively marked coating layer 2 on the substrate 1, a contrast layer 3 on the first selectively marked coating layer 2, and a second selectively marked coating layer 4 on the contrast layer 3. The shading used in Figure 1 is merely used to differentiate the drawing elements visually, and is not intended to indicate transparency in any way.

The selectively marked coating layers in the embodiment illustrated in Fig. 1 comprise particles. The particles in a first location 5 and a second location 6 of the selectively marked coating layers comprise an inorganic oxide shell 8 and organic pore forming agent 9. The particles in a third location 7 of the selectively marked coating layers comprise an inorganic oxide shell 10, but are substantially devoid of organic pore forming agent, as indicated by reference sign 11, as a result of at least a portion of the organic pore forming agent having been removed in third location 7.

In an embodiment, the methods of marking described herein further comprise the step of applying a contrast material on the coating layer or the coating composition. In other embodiments, some of the methods of marking described herein may be modified by first forming a contrast layer on a substrate, and then applying the coating composition on the contrast layer instead of first applying the coating composition on the substrate. In an embodiment, a contrast layer is in contact with a transparent substrate, and a coating layer is in contact with the contrast layer. In an embodiment, a coating layer is in contact with a transparent substrate and a contrast layer is in contact with the coating layer.

In an embodiment, methods for marking described herein may further comprise the steps of applying a layer of a contrast material and curing the contrast material to form a contrast layer. An additional coating layer may then be formed by applying a second layer of the coating composition on the contrast layer, and curing the second layer of the coating composition. The organic pore forming agent may then be removed from both the first layer and second layer of the coating simultaneously in a subsequent step.A first layer of the coating composition and a second layer of the coating composition may be cured in separate steps or may be cured at the same time. Likewise, the contrast material may also require curing and can be cured together with a layer of coating composition or at another time.

The order of the layers is not critical. For instance, in an embodiment, a contrast layer is in contact with a transparent substrate and a first selectively marked coating layer is in contact with the contrast layer. In another embodiment, a first selectively marked layer is in contact with a transparent substrate and a contrast layer is in contact with the first selectively marked coating layer.

In an embodiment, a first coating layer is selectively marked prior to applying and curing subsequent layers. For example, a first coating layer is present on a transparent substrate. At least a portion of the organic pore forming agent is removed from a selected location of the first coating layer to form a first selectively marked layer. This is followed by applying a second layer of coating composition and optionally on a contrast material on the first selectively marked layer. The second layer of coating composition and optionally the contrast material are then cured to form a a second coating layer and optionally a contrast layer. A step of removing at least a portion of the organic pore forming agent in a selected location of the first selectively marked coating layer and the second coating layer is then carried out. This step marks both the first selectively marked coating layer again and marks the second coating layer for the first time. Thus it is possible that the first selectively marked coating layer is marked twice and may have a marking that is different than the marking of the second selectively marked coating layer. This may create varying levels of coloration or contrast. Further coating layers and/or contrast layers may also be present. Accordingly, the coating and curing steps may be carried out in various combinations.

In an embodiment, the contrast layer has a refractive index of greater than 1.65, greater than 1.7 greater than 1.75, or greater than 1.8. In an embodiment, the contrast layer has a refractive index of less than 1.45, or less than 1.4. The refractive index of the contrast layer may be increased as a result of the step of removing at least a portion of the organic pore forming agent in a selected location of the coating layer, especially if that step is performed by thermally degrading the organic pore forming agent. The heat applied while thermally degrading the organic pore forming agent may cause densification of the contrast layer, especially if the contrast layer comprises an inorganic oxide, such as SiO₂ or TiO₂, or inorganic oxide precursor.

In an embodiment, the difference in average refractive index between the contrast layer and the coating layer(s) is greater than 0.1, or greater than 0.25 in the unmarked location(s). In an embodiment, the difference in average refractive index between the contrast layer and the coating layer(s) is greater than 0.3 or 0.45 in the marked location(s) of the coating layer. In an embodiment, the difference in average refractive index between the contrast layer and the coating layer(s) is greater than 0.1, or greater than 0.25 in the unmarked location(s) of the coating layer, and greater than 0.3 or 0.45 in the marked location (s) of the coating layer.

In an embodiment, the contrast material comprises an inorganic oxide or inorganic oxide precursor as described above. In an embodiment, the contrast layer is substantially devoid of organic pore forming agent. In an embodiment, the contrast layer comprises a material selected from the group consisting of silicon dioxide, aluminum oxide, hafnium dioxide, scandium oxide, tantalum pentoxide, thorium fluoride, titanium oxide, ytterbium oxide, zirconium oxide, calcium fluoride, and magnesium fluoride. In an embodiment, the contrast layer comprises TiO₂. The contrast material may be applied and cured using the same techniques as described above for the coating composition.

A further embodiment of the invention is a marked container comprising a multi-layer coating. The marked container comprises a transparent substrate, a first selectively marked coating layer, and a contrast layer in contact with the first selectively marked coating layer. The contrast layer has an average refractive index that is different from the average refractive index of the first selectively marked coating layer by at least 0.1. The first selectively marked coating layer comprises: (a) a first location of pores, wherein the first location of pores comprises a first amount of an organic pore forming agent, and a second location of pores, wherein the second location of pores comprises a second amount of an organic pore forming agent that is less than the first amount of organic pore forming agent. To further increase the visibility of the marking, additional coating layers or contrast layers may be employed. The number of layers is not practically limited. As such, in a further embodiment, a second contrast layer is present on a second selectively marked coating layer, and a third selectively marked coating layer is present on the second contrast layer.

Other embodiments of the invention relate to the use of a coating composition comprising (1) a matrix forming material comprising an inorganic oxide or inorganic oxide precursor, and (2) an organic pore forming agent as an anti-counterfeiting, serialization, time, or date marking system or mechanism.

The following examples further illustrate embodiments of the invention but, of course, should not be construed as in any way limiting its scope.

### Example

A TiO₂ sol is formed as follows. 30g (0.106M) titanium(IV) isopropoxide is added to a 500 ml conical flask equipped with a magnetic stirrer (spherical, 5 cm length). While stirring, 10g (0.167M ) glacial acetic acid is added. An exothermic reaction occurs, and the reaction mixture is allowed to reach a temperature of 50°C. After the reaction has cooled again to ambient room temperature (approximately one hour), the product is diluted with 150g (3.26M) absolute EtOH to form the TiO₂ sol. The TiO₂ sol has a solid content of approximately 2% and a viscosity of about 2 mPa·s.

A container made of boro-silicate glass is provided. The container is highly transparent. A coating composition of KhepriCoat®, available from DSM, is provided. KhepriCoat® comprises solvent and core-shell particles. The core-shell particles comprise a cationic copolymer, as the organic pore forming agent, and a shell comprising silica. The solid content is approximately 2% and the viscosity is about 2 mPa·s. The container is dipped in the coating composition and extracted at about 4 mm/sec. The container with coating composition on its external surface is cured by placing in an oven at 160-200 °C for 10 minutes to form a coating layer on the container.

After cooling to ambient temperature, a contrast layer is formed on the coating layer by dip coating the TiO₂ sol. The layer of TiO₂ sol is cured to form a contrast layer by again placing the container in the oven at 160-200 °C for 10 minutes. The container is again cooled. A second coating layer is formed on the contrast layer in the same way as the first coating layer. The container comprising the coating is then marked with a CO₂ laser. The laser operates at a wavelength of 10.6 microns, 80 W, 0.5 mm beam width, 0.2 mm hatch spacing, and 8 m/s scanning speed. A container comprising a visible marking is obtained.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. While certain optional features are described as embodiments of the invention, the description is meant to encompass and specifically disclose all combinations of these features unless specifically indicated otherwise or physically impossible.

## Claims

1. A method of marking a container comprising the steps of:
(1) applying a coating composition on the external surface of a container, the coating composition comprising
(a) a matrix forming material comprising an inorganic oxide or inorganic oxide precursor, and
(b) an organic pore forming agent,
(2) curing the coating composition, thereby forming a coating layer comprising a matrix, the matrix comprising an inorganic oxide and the organic pore forming agent,
(3) optionally, introducing a heat-sensitive product into the container; and
(4) removing at least a portion of the organic pore forming agent in a selected location of the coating layer.

2. The method of claim 1, wherein the step of introducing a heat-sensitive product into the container is performed, and wherein the step of removing at least a portion of the organic pore forming agent in a selected location of the coating layer is performed after the step of introducing the heat-sensitive product into the container.

3. The method of claim 1 or 2 wherein the organic pore forming agent comprises a polymer that is thermally degradable at a temperature of from 150 °C to 600 °C.

4. The method of any one of claims 1-3, wherein the external surface of the container comprises a glass.

5. The method of any one of claims 1-4, wherein the step of introducing a heat-sensitive product into the container is performed, and the method further comprises the step of sealing the container after introducing the heat-sensitive product into the container.

6. The method of any one of claims 1-5, further comprising the steps of applying a layer of a contrast material on the coating layer, curing the contrast material, thereby forming a contrast layer, applying a second layer of the coating composition on the contrast layer, and curing the second layer of the coating composition.

7. The method of any one of claims 1-6 wherein the matrix comprises SiO₂.

8. The method of any one of claims 1-7 wherein the organic pore forming agent is present in the coating composition as particles having an average size as measured by dynamic light scattering of from 10 nm to 300 nm.

9. The method of any one of claims 1-8 wherein the step of removing at least a portion of the organic pore forming agent in a selected location of the coating layer comprises heating the organic pore forming agent to a temperature at which the organic pore forming agent thermally degrades.

10. The method of any one of claim 1-9 wherein the coating layer comprises particles having a shell, the shell comprising an inorganic oxide, and a core, the core comprising organic pore forming agent.

11. The method of any one of claims 1-10 wherein the organic pore forming agent comprises a cationic copolymer.

12. The method of any one of claims 1-11 wherein the organic pore forming agent comprises a polyampholyte.

13. A marked container comprising:
(1) a container,
(2) optionally, a product inside the container, and
(3) a marking on the container, the marking comprising a coating layer, the coating layer comprising a matrix, and the matrix comprising
(a) an inorganic oxide,
(b) a first location of pores, wherein the first location of pores comprises a first amount of organic pore forming agent, and
(c) a second location of pores, wherein the second location of pores comprises a second amount of organic pore forming agent that is less than the first amount of organic pore forming agent.

14. The marked container of claim 13, further comprising a contrast layer in contact with the coating layer.

15. Use of a coating composition comprising (1) a matrix forming material comprising an inorganic oxide or inorganic oxide precursor, and (2) an organic pore forming agent as an anti-counterfeiting, serialization, time, or date marking system or mechanism.
